# EUROPEAN PATENT SPECIFICATION

(11) **EP 2 172 597 B1**
(45) Date of publication and mention of the grant of the patent: **27.11.2019**
(21) Application number: 09171729.8
(22) Date of filing: 30.09.2009
(51) Int. Cl.: E03F 5/02, F16L 47/26

(54) **Well**
Schacht
Regard

(30) Priority: 06.10.2008 FI 20085942
(43) Date of publication of application: 07.04.2010
(73) Proprietor: Uponor Infra Oy, 01510 Vantaa (FI)
(72) Inventor: Hippeläinen, Esko, 15200 Lahti (FI)
(74) Representative: Papula Oy

(56) References cited:
- DE-U1- 20 008 800
- FR-A1- 2 790 495
- FR-A1- 2 824 572
- NL-C2- 1 004 090
- SE-B- 450 161
- US-A- 5 386 669

## Description

### BACKGROUND OF THE INVENTION

The invention relates to a well comprising a body and at least one fitting for connecting a pipe to the well.

Typically, rainwater gullies and manholes or maintenance holes are formed such that a hole is made to a cylindrical well body at a site and a pipe is connected to the hole. The pipe is connected to the hole e.g. by glueing or welding. However, such a manner to form a well requires many different working phases at the site, so all in all it is quite laborious and cumbersome to make a well. Further, it requires a considerable amount of skill to provide connections in a sealed manner.

Thus, wells are known wherein connection fittings are formed already in connection with the body, the outer surface of the connection fittings being provided with a connection surface to which a sleeve is arranged, and a pipe to be connected is arranged inside the sleeve. When using such a structure, it is very difficult to keep the connection surface intact during transportation and storage as well as other handling of the well. Further, the process of connecting a pipe to the well thus requires the use of a sleeve. All in all, the structure of the well is thus very complex and cumbersome.

SE 450 161 describes a well comprising connection fittings having an outermost cylindrical sheath which is directed outwards from the body of the well and which, by an annular part, is connected to a cylindrical sheath directed towards the inside of the body of the well, the inwards directed cylindrical sheath, in turn, being connected by an annular part to a cylindrical part directed outwards from the body of the well, etc. In such a case, the connection fitting is thus provided with several connection surfaces residing one inside another and having different diameters. However, the structure of such a solution is extremely complex and it is a challenging task to connect pipes to the fitting in a sealed manner. Further, it is very difficult to use the solution for forming connection surfaces with different diameters to be spaced at small distances from one another.

FR 2 824 572 A1, D3 FR 2 790 495 A1, and US 5386669 A disclose outward extending fitting arrangements with outer connecting surfaces.

NL 1004090 C2 discloses a mold for forming a product with an inlet opening and an outlet opening.

DE 20008800 U1 discloses fitting arrangements based on separate fitting parts.

### BRIEF DESCRIPTION OF THE INVENTION

An object of the present invention is to provide a novel well.

A well according to the invention is characterized in claim 1, in that the fitting is provided with an inner sheath which is directed towards the inside of the body and which is provided with internal connection surfaces for connecting the pipe in connection with the well, inner diameters of the connection surfaces being different in size for connecting pipes of different sizes to the fitting, and in that the connection surfaces having different inner diameters are arranged successively in an axial direction of the fitting such that a connection surface having the smallest diameter resides closest to a centre part of the well while a connection surface having the largest diameter resides farthest away from the centre part of the well and that the well is formed by rotational moulding.

An idea of the invention is that the body of the well is provided with a fitting for connecting a pipe to the well. The fitting is provided with an inner sheath which is directed towards the inside of the body and which is provided with connection surfaces for connecting the pipe in connection with the well. The inner sheath has several points with different inner diameters for connecting pipes of different sizes to the fitting, and the points having different inner diameters are arranged successively in an axial direction of the fitting such that a point having the smallest diameter resides closest to a centre part of the well while a point having the largest diameter resides farthest away from the centre part of the body of the well.

The internal connection surfaces are safe and protected against damage during transportation and handling of the well. When the different inner diameters have been arranged successively in the axial direction of the fitting, the structure in its entirety is simple and yet the fitting is easy to utilize for connecting pipes with different diameters.

An idea underlying an embodiment is that the fitting is provided with an outer sheath which is directed outwards from the body and in the inside of which an inner sheath is arranged. In such a case, over a portion of the outer sheath, a wall of the fitting is thus directed outwards from the body and, subsequently, over a portion of the inner sheath inside the outer sheath, turns to be directed towards the inside of the body. When the fitting is provided with such a portion of the outwards directed outer sheath, over the portion of the inner sheath the fitting does not extend so much towards the inside of the well as without the outer sheath. In such a case, no need exists to substantially increase the outer diameter of the well even though the fitting is provided with a part directed towards the centre part of the well. On account of the outer sheath, it is also reasonably easy to manufacture the well since in rotational moulding it is challenging to obtain a sufficient wall thickness for a front end of the fitting if the fitting comes to a great extent inside the well with respect to the rest of the body. In a similar manner, such a structure would cause problems when manufacturing wells by blow moulding. In such a case, the tensile elongation ratio of a point being moulded would easily become so large that the wall would tend to be torn.

An idea underlying another embodiment is that the body is provided with at least two connection fittings such that the fittings are arranged on top of one another. This enables a well formed by one body structure to be used in several applications of use. The same well structure may be used e.g. as a rainwater gully or as a manhole. Also, fittings equipped with an internal connection surface either do not protrude at all from the body of the well or at least they do not protrude very much therefrom, so even a well equipped with several fittings is not structurally large and cumbersome, which makes the storage and transportation costs of the well reasonable; further, the well is simple and easy to handle and transport.

### BRIEF DESCRIPTION OF THE FIGURES

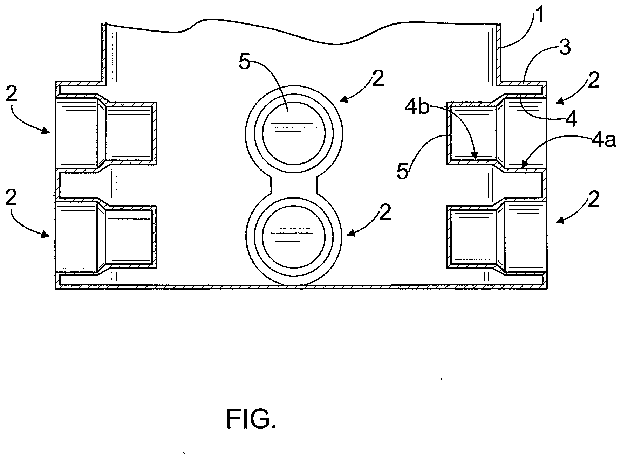

The invention is described in closer detail with reference to the accompanying figure, which is a schematic cross-sectional side view showing a lower part of a body of a well.

For the sake of clarity, the figure shows some embodiments of the invention in a simplified manner.

### DETAILED DESCRIPTION OF THE INVENTION

A well may comprise a body, which forms a lower part thereof, and a riser connected to the body. In such a case, the riser may thus be a separate part connected to the body forming the lower part of the well. On the other hand, the lower part of the well and the riser may also be formed as one piece, in which case the body of the well may be considered to be formed by the lower part of the well and the riser.

The figure shows a part of a body 1 of a well. The body 1 of the well is provided with fittings 2 for connecting a pipe to the well. In the embodiment shown in the figure, the body 1 is provided with eight fittings 2. Since the figure shows a cross-sectional view, only six fittings 2 are visible in the figure. The fittings 2 are formed as integral parts of the body 1. The fittings 2 may be formed in the same working phase as the body 1. The well 1 is manufactured by using rotational moulding. The well may also be formed by blow moulding, for instance. The material of the well 1 may be e.g. polyethylene PE, cross-linked polyethylene PEX or polypropylene PP.

A fitting 2 is provided with an outer sheath 3 which is directed outwards from the body 1. Further, the structure of the fitting 2 is formed such that from the outwards directed outer sheath 3, a wall of the fitting 2 turns into an inner sheath 4 which is directed towards the inside of the body 1. The inner sheath 4 is provided with connection surfaces 4a, 4b for connecting a pipe in connection with the well. A first connection surface 4a has an inner diameter which is larger than that of a second connection surface 4b. A pipe having a larger outer diameter may thus be connected to the connection surface 4a and, similarly, a pipe having a smaller outer diameter may be connected utilizing the connection surface 4b. The connection surfaces 4a and 4b are arranged successively in an axial direction of the fitting 2. The second connection surface 4b having the smaller diameter is arranged closer to a centre part of the well than the connection surface 4a having the larger diameter. Instead of the two connection surfaces shown in the figure, also three or more connection surfaces having diameters of different size may be arranged in one fitting.

The fitting 2 is provided with a bottom 5 of the fitting, in which case the fitting 2 is a closed structure when it has not been put to use. Upon putting the fitting 2 to use, at least a majority of the bottom 5 of the fitting is removed. Consequently, the fitting 2 is provided with an opening wherefrom a liquid is allowed to flow. The fitting 2 may be opened e.g. by sawing or by cutting with a knife. If a largish pipe is connected to the well, e.g. a pipe which becomes sealed to the connection surface 4a, the portion of the second connection surface 4b may be completely removed from the fitting 2, for instance.

The body is provided with at least two fittings 2 arranged on top of one another. The distance of a lower fitting 2 from the bottom of the well is thus smaller than the distance of an upper fitting 2 from the bottom of the well. In such a solution, the same structure may be used for several different purposes of use. When the well is used as a rainwater gully, the upper fittings 2 may be put to use. In such a case, space is provided at a lower part of the well for sand, leaves and other debris. If, again, the well is used as a manhole, the pipes are connected to the lower fittings 2.

The well may also be arranged to be a well in a sewer system. In such a case, the bottom of the well may be shaped such that it has a flow channel or flow channels from an inlet fitting or inlet fittings to an outlet fitting. The flow channel may also be formed by a separate installation plate which is arranged on the bottom of the well. The installation plate may be shaped such that it guides the flow efficiently and removes e.g. a step from a flow path to the outlet fitting.

In the figure, the connection surfaces 4a and 4b having different inner diameters have been made concentric. However, the connection surfaces 4a, 4b do not necessarily have to be concentric but they may be formed e.g. such that their lower edges are tangent to one another.

The accompanying figure thus shows the structure of a well which comprises eight fittings 2, i.e. the fittings extend in four different directions at an angle of 90° with respect to one another and two fittings 2 extend in each direction. However, an angle between the extension directions of the fittings and the number of fittings to be arranged around the well as well as the number of fittings 2 to be arranged on top of one another may vary, as necessary.

In some cases the features disclosed in this application may be used as such, irrespective of other features. On the other hand, the features disclosed in this application may be combined in order to provide different combinations, when necessary.

The drawings and the related description are only intended to illustrate the idea of the invention. The details of the invention may vary within the scope of the claims.

## Claims

1. A well comprising a body (1) and at least one fitting (2) for connecting a pipe to the well, wherein the fitting (2) is provided with an inner sheath (4) which is directed towards the inside of the body (1) and which is provided with internal connection surfaces (4a, 4b) for connecting the pipe with the well, the inner diameters of the connection surfaces (4a, 4b) being different in size for connecting pipes of different sizes to the fitting (2), **characterized in that** the connection surfaces (4a, 4b), having different inner diameters, are arranged successively in an axial direction of the fitting (2) such that a connection surface (4b) having the smallest diameter resides closest to a centre part of the well while a connection surface (4a) having the largest diameter resides farthest away from the centre part of the well, that
the well is formed by rotational moulding; and that the fitting (2) is provided with an outer sheath (3) which is directed outwards from the body (1), and **in that** the inner sheath (4) is arranged inside the outer sheath, whereby the fitting (2) continues from an outwards directed part of the outer sheath (3) to an inwards directed part of the inner sheath (4).

2. A well as claimed in claim 1, **characterized in that**
the well is a rainwater gully.

3. A well as claimed in claim 1, **characterized in that**
the well is a manhole.

4. A well as claimed in any one of the preceding claims, **characterized in that**
the body (1) is provided with at least two connection fittings (2) such that the fittings (2) are arranged on top of one another.

## Patentansprüche

1. Schacht, umfassend einen Körper (1) und mindestens einen Anschluss (2) zum Verbinden eines Rohres mit dem Schacht, wobei
der Anschluss (2) mit einer Innenhülle (4) versehen ist, die zur der Innenseite des Körpers (1) gerichtet ist und die mit inneren Anschlussflächen (4a, 4b) zum Verbinden des Rohres mit dem Schacht versehen ist, die Innendurchmesser der Anschlussflächen (4a, 4b) unterschiedlich groß sind, um Rohre unterschiedlicher Größe mit dem Anschluss (2) zu verbinden, **dadurch gekennzeichnet, dass** die Anschlussflächen (4a, 4b) mit unterschiedlichen Innendurchmessern nacheinander in axialer Richtung des Anschlusses (2) angeordnet sind, so dass eine Anschlussfläche (4b) mit dem kleinsten Durchmesser einem Mittelteil des Schachts am nächsten liegt, während eine Anschlussfläche (4a) mit dem größten Durchmesser am weitesten vom Mittelteil des Schachts entfernt liegt, dass der Schacht durch Rotationsformen gebildet ist; und dass der Anschluss (2) mit einer Außenhülle (3) versehen ist, die vom Körper (1) nach außen gerichtet ist, und dass die Innenhülle (4) innerhalb der Außenhülle angeordnet ist, wodurch der Anschluss (2) von einem nach außen gerichteten Teil der Außenhülle (3) zu einem nach innen gerichteten Teil der Innenhülle (4) geführt ist.

2. Schacht nach Anspruch 1, **dadurch gekennzeichnet, dass** der Schacht ein Regenwassergully ist.

3. Schacht nach Anspruch 1, **dadurch gekennzeichnet, dass** der Schacht ein Mannloch ist.

4. Schacht nach einem der vorhergehenden Ansprüche, **dadurch gekennzeichnet, dass**
der Körper (1) mit mindestens zwei Anschlüssen (2) versehen ist, so dass die Anschlüsse (2) übereinander angeordnet sind.

## Revendications

1. Puits comprenant un corps (1) et au moins un raccord (2) destiné à raccorder un tuyau au puits, le raccord (2) étant pourvu d'une gaine intérieure (4) qui est orientée vers l'intérieur du corps (1) et munie de surfaces de raccordement intérieures (4a, 4b) pour raccorder le tuyau au puits, les diamètres intérieurs des surfaces de raccordement (4a, 4b) présentant des tailles différentes pour raccorder des tuyaux de différentes tailles au raccord (2),
**caractérisé en ce que** les surfaces de raccordement (4a, 4b) présentant des diamètres intérieurs différents sont disposées successivement dans une direction axiale du raccord (2) de sorte qu'une surface de raccordement (4b) ayant le diamètre le plus petit est située le plus près d'une partie centrale du puits, alors qu'une surface de raccordement (4a) ayant le diamètre le plus grand est située le plus loin de la partie centrale du puits, **en ce que**
le puits est formé par moulage rotatif et le raccord (2) est pourvu d'une gaine extérieure (3) qui est orientée vers l'extérieur du corps (1), et **en ce que** la gaine intérieure (4) est disposée à l'intérieur de la gaine extérieure, de sorte que le raccord (2) continue depuis une partie orientée vers l'extérieur de la gaine extérieure (3) jusqu'à une partie orientée vers l'intérieur de la gaine intérieure (4).

2. Puits suivant la revendication 1, **caractérisé en ce qu'**il est un puisard d'eaux de pluie.

3. Puits suivant la revendication 1, **caractérisé en ce qu'**il est un regard.

4. Puits suivant une des revendications précédentes, **caractérisé en ce que** le corps (1) est pourvu de deux raccords (2) au moins de sorte que les raccords (2) sont disposés l'un au-dessus de l'autre.
